# EUROPÄISCHE PATENTSCHRIFT

(11) **EP 0 636 070 B1**
(45) Veröffentlichungstag und Bekanntmachung des Hinweises auf die Patenterteilung: **27.08.1997**
(21) Anmeldenummer: 94908311.7
(22) Anmeldetag: 15.02.1994
(51) Int. Cl.: B60R 7/08

(54) **AUFBEWAHRUNGSVORRICHTUNG FÜR BRILLEN INSBESONDERE ZUM EINBAU IN KRAFTFAHRZEUGEN**
RETAINING DEVICE FOR SPECTACLES, IN PARTICULAR FOR INSTALLATION IN MOTOR VEHICLES
DISPOSITIF DE RANGEMENT DE LUNETTES DESTINE EN PARTICULIER A ETRE MONTE DANS DES VEHICULES A MOTEUR

(30) Priorität: 15.02.1993 CH 446/93; 07.05.1993 CH 1403/93; 18.06.1993 CH 1813/93; 19.11.1993 CH 3451/93
(43) Veröffentlichungstag der Anmeldung: 01.02.1995
(60) Teilanmeldung: 96103367.7
(73) Patentinhaber: fischerwerke Artur Fischer GmbH & Co. KG, D-72178 Waldachtal (DE)
(72) Erfinder: ACKERET, Peter, CH-8700 Küsnacht (CH)
(86) Internationale Anmeldenummer: EP9400431
(87) Internationale Veröffentlichungsnummer: WO9418032

(56) Entgegenhaltungen:
- DE-A- 4 122 472
- FR-A- 2 212 118
- FR-A- 2 351 631
- FR-A- 2 648 770
- US-A- 2 884 219
- US-A- 4 695 026
- US-A- 4 715 575

## Beschreibung

Die vorliegende Erfindung betrifft eine Brillenhalterung, insbesondere für den Einbau in Kraftfahrzeugen (Kfzg.), der in FR-A-2 351 631 geoffenbarten und im einleitenden Teil des Anspruchs 1 angegebenen Art.

Der Gebrauch von Seh- und Sonnenbrillen in Kfzg. ist weit verbreitet. Insbesondere für den Fahrer muss die Brille bei plötzlich auftretender Blendung oder Abdunklung, beispielsweise beim Durchfahren von Tunnels, oft kurzfristig während der Fahrt handhabbar sein, sodass dazu lediglich eine Hand zur Verfügung steht. Es ist daher erforderlich, dass die Brille im Kfzg. so aufbewahrt werden kann, dass sie vom Fahrer einhändig in die Aufbewahrungsvorrichtung eingelegt bzw. aus dieser entnommen werden kann.

Dabei sollen auch die Brillenbügel einhändig auf- und zugeklappt werden können, ohne dass dazu eine den Fahrer ablenkende Aufmerksamkeit erforderlich ist.

Einerseits soll die Brille problemlos und leichtgängig in die Aufbewahrungsvorrichtung eingelegt und aus dieser entnommen werden können, andererseits muss die Brille so gut in der Aufbewahrungsvorrichtung plaziert und festgehalten werden, dass auch schwergängige Brillenbügel auf- und zugeklappt werden können, ohne dass die Brille dabei aus der Aufbewahrungsvorrichtung gerissen oder deformiert werden kann.

Im aufbewahrten Zustand soll die Brille vor Staub, Verschmutzung und Verkratzen geschützt sein. Ebenso ist eine Abschirmung gegen Sonneneinstrahlung erwünscht. Damit die Bedienung durch den Fahrer während der Fahrt möglich ist, muss die Vorrichtung einerseits im Kfzg. so anbringbar und bedienbar sein, dass der Blick des Fahrers dazu nicht von der Strasse weichen muss. Andererseits darf die Sicht des Fahrers durch die Vorrichtung nicht beinträchtigt werden. Die Verwendung der Vorrichtung in zahlreichen verschiedenen Kfzg.-Modellen erfordert ferner eine möglichst universelle Einbauart, die in den einzelnen Kfzg.-Modellen nur minimale und kostengünstige Anpassungen notwendig macht.

Brillen sind in unzähligen Ausführungen auf dem Markt erhältlich. Form, Höhe, Breite und Dicke sowie die Nasenausnehmung und die Anordnung der Bügel variieren in einem grossen Streubereich. Es gibt auch zahlreiche Brillenmodelle in sehr empfindlichen Ausführungen, die sich bei Anwendung von Druck leicht deformieren lassen.

In der FR-A 2 351 631 ist eine Brillenhalterung offenbart. Diese Brillenhalterung weist eine Rückwand zum Anbringen in einem Kraftfahrzeug auf. Die Rückwand ist mit einem senkrecht von ihr abstehenden Zapfen versehen, der als Parallelführung dient und auf dem eine Andruckplatte verschiebbar gelagert ist, die mittels einer Feder gegen die Rückwand gedrückt wird. Zum Einsetzen einer Brille in die offenbarte Brillenhalterung muß die Andruckplatte mit einer Hand gegen die Kraft der Feder von der Rückwand wegbewegt und mit der anderen Hand die Brille mit bereits angelegten Brillenbügeln eingesetzt werden. Diese Brillenhalterung hat den Nachteil, daß sie nicht mit einer Hand bedient werden kann, es ist also unmöglich, eine Brille in die offenbarte Brillenhalterung einzusetzen, ohne beide Hände vom Lenkrad zu nehmen. Dies hat den Nachteil, daß zum Einsetzen der Brille in die Brillenhalterung und zur Entnahme der Brille angehalten werden muß. Eine schnelle Entnahme der Brille bei Bedarf während der Fahrt ist nicht möglich.

Aus der US-A4 695 026 ist eine Brillenhalterung für ein Kraftfahrzeug bekannt, die als eine Art Federklammer ausgebildet ist, zwischen deren Klammerarme eine Brille einsetzbar ist. Die Klammerarme greifen von oben und von unten an einem Brillengestell einer in die Brillenhalterung eingesetzten Brille im Bereich deren Nasenbügel an. Ist keine Brille in die Halterung eingesetzt, liegen deren Klammerarme aufeinander auf, die klammerartig ausgebildete Brillenhalterung ist geschlossen. Diese Brillenhalterung hat den Nachteil, daß ihre Klammerarme auseinander gedrückt werden müssen, um eine Brille einsetzen zu können. Da die Klammerarme aufeinander aufliegen, können sie nicht mit der in die Brillenhalterung einzusetzenden Brille auseinander gedrückt werden. Es sind also zwei Hände zum Einsetzen der Brille notwendig und das Einsetzen der Brille in die Brillenhalterung erfordert die Aufmerksamkeit des Fahrers und lenkt ihn vom Verkehrsgeschehen ab. Weiterer Nachteil der bekannten Brillenhalterung ist, daß die Brillenbügel nach dem Absetzen der Brille angelegt werden müssen, bevor die Brille in die Brillenhalterung eingesetzt werden kann, und daß die Brillenbügel erst nach Entnahme der Brille aus der Brillenhalterung wieder ausgeschwenkt werden können, um die Brille aufzusetzen.

Aus der US-A2 884 219 ist eine Brillenhalterung zur Präsentation von Brillen bei einem Optiker bekannt. Diese weist einen federbelastet schließenden Haltebügel auf, der schwenkbar an einer Grundplatte angebracht ist und eine eingelegte Brille im Bereich ihres Nasenbügels übergreift. Ein von der Grundplatte abstehender Abstandhalter bewirkt einen Zwischenraum zwischen Haltebügel und Grundplatte. Der Zwischenraum zwischen Haltebügel und Grundplatte ist nicht verstellbar, d.h. die Brillenhalterung ist nicht an verschiedene Brillendicken anpassbar. Eine eingelegte Brille wird nicht spiel- und klapperfrei gehalten. Ein weiterer Nachteil ist, daß die Brille mit angelegten Brillenbügeln in die Brillenhalterung eingesetzt werden muß, weswegen die Brillenbügel bei aus der Brillenhalterung entnommener Brille an diese angelegt bzw. ausgeschwenkt werden müssen.

Aus der FR-A2 212 118 ist eine Brillenhalterung bekannt die aus einem ebenen Zuschnitt besteht, an dem durch Falzen entlang dreier zueinander paralleler Linien vier Klappen gebildet sind. Die Klappen sind um ihre Falze schwenkbar miteinander verbunden. Dabei bildet eine erste Klappe eine Vorderwand, eine zweite einen Boden, eine dritte eine Rückwand und die vierte einen Deckel. Durch Ausschnitte in der ersten, der dritten und der vierten Klappe ist ein Band gezogen, dessen eines Ende an der ersten Klappe fest angebracht ist und dessen anderes Ende, das durch den Deckel hindurchgezogen ist, zum Verschließen der Brillenhalterung mittels eines Klettverschlußes oder dgl. mit dem einen Ende des Bandes lösbar verbindbar ist. Ein Abschnitt des Bandes zwischen Vorder- und Rückwand der Brillenhalterung bildet eine Nasenstütze für eine in die Brillenhalterung eingelegte Brille.

Diese Brillenhalterung hat den Nachteil, daß das Einsetzen der Brille in die Brillenhalterung die Aufmerksamkeit des Fahrers auf sich zieht und ihn vom Verkehrsgeschehen ablenkt.

Der Erfindung liegt die Aufgabe zugrunde, eine Halterung zur Aufbewahrung und Ablage von verschiedenartigen Brillenmodellen, insbesondere für Kraftfahrzeuge zu schaffen, in welcher die Brillen geschützt sind und einhändig abgelegt bzw. entnommen werden können.

Die Lösung dieser Aufgabe wird mit den Merkmalen des Anspruches 1 erreicht.

Die erfindungsgemäße Brillenhalterung weist einen Träger mit einer Bodenwand und einer Rückwand mit Brillenabstützungen, sowie eine am Träger angeordnete Brillenaufnahme auf, welche vom Benützer mittels Stellvorrichtung schnell und bequem an die Dicken verschiedener Brillenmodelle angepaßt werden kann. Die Brille kann einhändig aus der Brillenhalterung entnommen bzw. in diese eingesetzt und die Brillenbügel in der Brillenhalterung auf- und zugeklappt werden. Damit eignet sich die Brillenhalterung insbesondere zum Einbau in Kraftfahrzeugen, da aus Sicherheitsgründen eine einhändige Entnahme und Ablage erforderlich ist.

Weitere Merkmale und Vorteile von Ausführungsarten der Erfindung ergeben sich aus den Unteransprüchen bzw. aus der Beschreibung von Ausführungsbeispielen.

Ausführungsbeispiele der Erfindung werden nachstehend unter Bezugnahme auf die beigefügten Zeichnungen näher erläutert.
- Fig. 1: zeigt eine erste Ausführungsform der Brillenhalterung mit eingesetzter Brille in perspektivischer Darstellung.
- Fig. 2: zeigt die Einzelteile der demontierten Brillenhalterung gemäss Fig. 1 in perspektivischer Darstellung.
- Fig. 3: zeigt einen Querschnitt durch die Brillenhalterung gem. Fig. 1 und 2 ohne eingesetzte Brille.
- Fig. 4: zeigt einen Querschnitt durch die Brillenhalterung gem. Fig. 3 mit eingesetzter Brille.
- Fig. 5: zeigt in schematischer Ansicht eine Detaikonstruktion einer Variante der Verstellmechanik für die Andruckplatte.
- Fig. 6: zeigt in schematischer Ansicht eine Detailkonstruktion einer weiteren Variante der Verstellmechanik für die Andruckplatte.
- Fig. 7: zeigt eine Variante der Brillenhalterung mit zwei eingesetzten Schutzelementen in der Frontansicht.
- Fig. 8: zeigt die Brillenhalterung gem. Fig. 7 im Querschnitt.
- Fig. 9: zeigt eine zweite Ausführungsform der Brillenhalterung mit eingesetzter Brille in der Frontansicht.
- Fig. 10: zeigt die Brillenhalterung gem. Fig. 9 mit eingesetzter Brille in der Aufsicht.
- Fig. 11: zeigt die Brillenhalterung gem. Fig. 9 u. 10 im Querschnitt.
- Fig. 12: zeigt eine perspektivische Darstellung der Brillenhalterung gem. Fig. 9 bis 11 mit eingesetzter Brille.
- Fig. 13 bis 15: zeigen in schematischer Frontansicht und im Querschnitt weitere Ausführungsformen von Andruckplatten der Brillenhalterung.

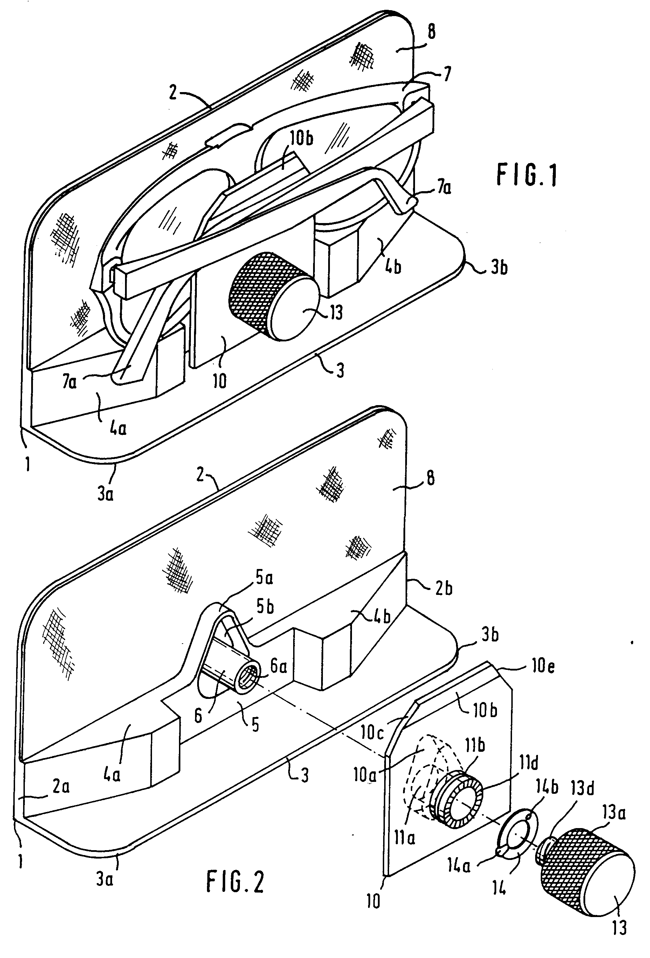

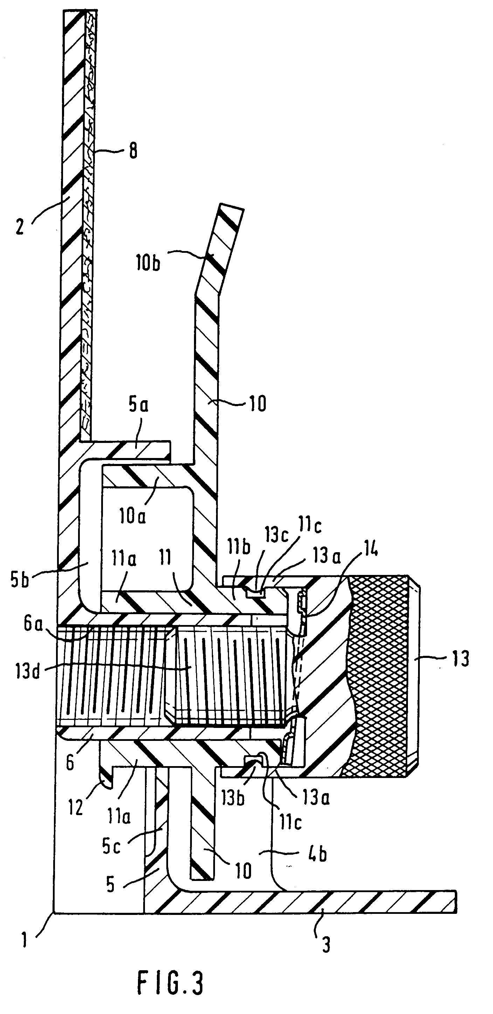

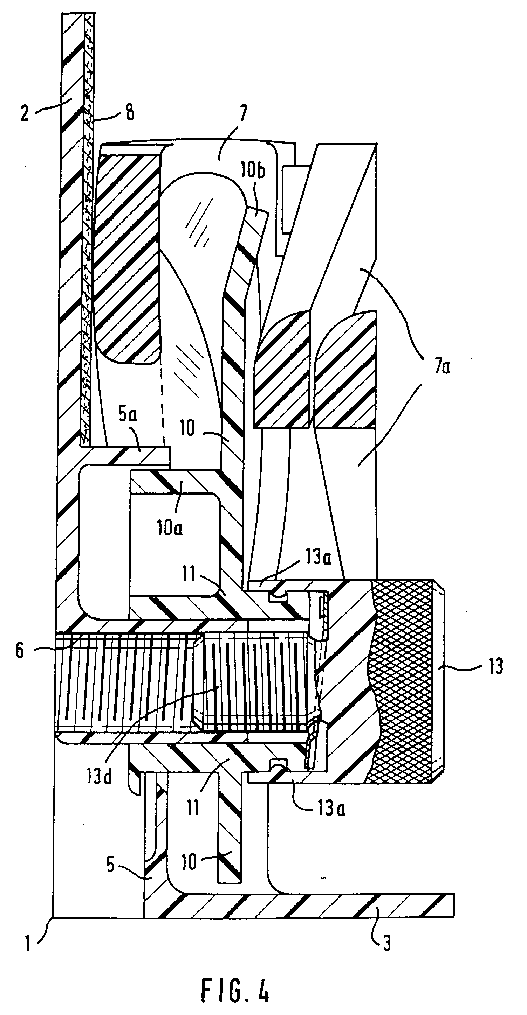

In Figuren 1 bis 4 wird eine erste Ausführungsform der Brillenhalterung in verschiedenen Ansichten mit und ohne eigelegter Brille gezeigt.

Der Träger 1 hat einen im wesentlichen L-förmigen Querschnitt, der von der Rückwand 2 und der Bodenwand 3 gebildet wird, welche über die kastenförmigen Brillenabstützungen 4a, 4b miteinander verbunden sind.

Die Brillenabstützungen 4a, 4b sind im Mittelbereich des Trägers 1 über einen gegen die Rückwand 2 hin zurückversetzten Verbindungsabschnitt 5 miteinander verbunden und verjüngen sich gegen die äusseren Endkanten 2a, 2b der Rückwand 2 hin.

In seinem Mittelbereich weist der Verbindungsabschnitt 5 eine nach oben gerichtete, nasenförmige Ausbuchtung 5a auf. Im Hohlraum 5b der Ausbuchtung 5a ist eine zylin derförmige Gewindehülse 6 angeordnet, welche mit der Rückwand 2 der Halterung 1 verbunden und mit einem Innengewinde 6a versehen ist.

Im Bereich oberhalb der Brillenabstützungen 4a, 4b sowie der Ausbuchtung 5a und des Verbindungsabschnittes 5 ist die Rückwand 2 auf ihrer inneren Oberfläche mit einem, die Brille 7 gegen Verkratzen schützenden Belag 8 (beispielsweise einem Filzstoff) belegt.

Die Bodenwand 3 ragt über die Brillenabstützungen 4a, 4b hinaus und ist an ihren Ecken 3a, 3b gerundet.

Der Träger 1 ist vorteilhafterweise einstückig aus thermoplastischen Material im Spritzgussverfahren hergestellt, wobei dann die Brillenabstützungen 4a, 4b sowie der Verbindungsabschnitt 5 von unten und/oder von hinten ausgenommen sind, sodass die Herstellung mit einfachen Spritzgusswerkzeugen möglich ist.

Am Träger 1 ist die Andruckplatte 10 über die Führungshülse 11, welche teleskopisch auf der Gewindehülse 6 geführt ist, parallelverschieblich zur Rückwand 2 des Trägers 1 gelagert.

An der Andruckplatte 10 ist eine komplementär zur Ausbuchtung 5a ausgebildete und in dieser geführte Nase 10a angeordnet, welche ein Verdrehen der Andruckplatte 10 bezüglich des Trägers 1 verhindert.

Die Längen des gegen die Rückwand 2 des Trägers 1 ragenden Führungsabschnittes 11a, der Führungshülse 11 sowie der Nase 10a und der Ausbuchtung 5a sind so bemessen, dass sich einerseits, auch bei maximaler Oeffnungsposition zwischen der Rückwand 2 und der Andruckplatte 10 zwischen dieser und der Ausbuchtung 5a keine Oeffnung bilden kann, in welcher sich beim Verschieben der Andruckplatte 10 gegen die Rückwand 2 eine in die Halterung eingelegte Brille 7 verklemmen könnte - und sich andererseits die Andruckplatte 10 so nahe an die Rückwand 2 verschieben lässt, dass auch eine Brille 7 von minimaler Dicke sicher zwischen der Rückwand 2 und der Andruckplatte 10 festgeklemmt werden kann.

Die Führungshülse 11 ist mit einem über die Andruckplatte 10 hinaus nach hinten ragenden Führungsfortsatz 11b verlängert, sodass die Andruckplatte 10 bestmöglich gegen ein Abkippen bzw. die Führung zwischen der Gewindehülse 6 und der Führungshülse 11 gegen ein Verklemmen abgestützt sind.

Die Breite der Andruckplatte 10 ist so bemessen, dass sie zwischen die Brillenabstützungen 4a, 4b hinein parallel zur Rückwand 2 verschoben werden kann.

An ihrem oberen Ende 10b ist die Andruckplatte 10 nach hinten abgewinkelt und seitlich mit Schrägen 10c, 10e versehen, um das Einführen und Entnehmen der Brille 7 zu einleichtern.

Die Andruckplatte 10 ist vorzugsweise aus einem elastischen Material gefertigt, welches sich den Konturen einer eingelegten Brille 7 bestmöglich anpassen und diese mit leichter Klemmung gegen die Rückwand 2 pressen kann.

Am Ende des Führungsabschnittes 11a ist ein Anschlagnocken 12 angeordnet, der beim Auflaufen auf die Stirnwand 5c des Verbindungsabschnittes 5 den maximalen Oeffnungsweg der Andruckplatte 10 begrenzt.

Die Ausbuchtung 5a bildet zusammen mit der Nase 10a eine Zentrierung, welche in die Nasenausnehmung einer eingesetzten Brille 7 ragt und diese seitlich zentriert. Die Andruckplatte 10 wird vorzugsweise zusammen mit der Führungshülse 11 und Nase 10a als einstückiges Kunststoffspritzgussteil hergestellt.

Hinter dem Führungsfortsatz 11b ist eine Verstellschraube 13 angeordnet, die mit einem zylinderförmigen Mantel 13a versehen ist, welcher den Führungsfortsatz 11b überlappt und nach innen gerichtete Mitnehmernocken 13b, 13c aufweist, welche durch elastische Verformung des Mantels 13a bei der Montage der Verstellschraube 13 in einer nutförmigen Ausnehmung 11c des Führungsfortsatzes 11b einrasten, sodass die Verstellschraube 13 drehbar mit der Andruckplatte 10 verbunden ist.

Der Schaft 13d der Verstellschraube 13 ist mit einem Aussengewinde versehen, welches im Innengewinde 6a der Gewindehülse 6 eingeschraubt ist.

Zwischen der Innenseite der Verstellschraube 13 und dem Führungsfortsatz 11b ist ein Federring 14 eingelegt, der mit einem Anschlag 14a gegenüber der Verstellschraube 13 gegen Verdrehen gesichert ist und einen federnden Nocken 14b aufweist, der in einer auf der Stirnseite des Führungsfortsatzes 11b angeordneten Rasterung 11d einrastet und so eine Einstellung der Verstellschraube 13 fixiert.

Durch Drehen an der Verstellschraube 13 kann der Benützer die Distanz zwischen der Rückwand 2 und der Andruckplatte 10 verstellen und an die Dicke einer eingesetzten Brille 7 stufenlos anpassen, bis sich die Andruckplatte 10 leicht deformiert und so die Brille 7 zwischen der Rückwand 2 und der Andruckplatte 10 festgeklemmt wird.

Durch die Elastizität der Andruckplatte 10 wird sichergestellt, dass die Brille 7 beim Zurdrehen der Verstellschraube 13 nicht beschädigt wird, indem der Druck auf die Brille abgefedert wird und so langsam ansteigt.

Durch den relativ eng begrenzten Federweg der Andruckplatte 10 wird die Brille so abgestützt, dass auch schwergängige Brillenbügel 7a einer in die Brillenhalterung eingesetzten Brille 7 hinter der Andruckplatte 10 ausgeklappt werden können, ohne dass sich dabei die Andruckplatte 10 nach hinten ergeben und die Brille 7 aus der Halterung gerissen werden könnte.

Trotzdem ist ein leichtgängiges Einsetzen und Entnehmen der Brille 7 zwischen die Rückwand 2 und die Andruckplatte 10 gewährleistet.

Im weiteren wird die Brille 7 zwischen der Rückwand 2 und der Andruckplatte so festgeklemmt, dass sie auch beim Umklappen oder Drehen der Brillenhalterung (bespielsweise beim Einklappen in ein Schutzgehäuse) nicht aus der Brillenhalterung herausfallen und auch keine Vibrationsgeräusche verursachen kann.

Durch die Verjüngung der Brillenabstützungen 4a, 4b gegen die äusseren Endkanten 2a, 2b hin ergibt sich der notwendige Platz für die eingeklappten Brillenbügel 7a, wobei die Bodenwand 3 als Schutz für die eingeklappten Brillenbügel 7a dient.

Die Verstellschraube 13 ist so plaziert, dass sie unterhalb der Brillenbügel 7a einer in die Brillenhalterung eingesetzten Brille 7 liegt, so dass einerseits die Brillenbügel 7a vollständig eingeklappt werden können und die Verstellschraube 13 andererseits auch bei eingeklappten Bügeln zum Anpassen der Andruckplatte 10 zugänglich bleibt.

Durch die vorgesehene Verstellmöglichkeit kann die Brillenhalterung von einer Bedienerseite her durch den Benützer einfach und schnell an Brillen verschiedenster Formen und Grössen angepasst werden, wobei jede Brille so in der Brillenhalterung festgehalten wird, dass ihre Bügel auch wenn sie schwergängig sind, einhändig auf- und zugeklappt werden können ohne dass dabei die Brille aus der Brillenhalterung kippen könnte.

Trotzdem kann die Brille einhändig und mit minimalem Kraftaufwand aus der Brillenhalterung entnommen oder in diese eingesetzt werden, wobei dies sowohl mit eingeklappten wie auch mit offenen Brillenbügeln möglich ist, wodurch dem Anwender grösstmöglicher Bedienungskomfort bei minimaler Ablenkung gewährleistet wird.

Die Brillenhalterung ist als einheitliche Baugruppe mit nur vier Bauteilen konzipiert, welche ohne zusätzliche Anpassungen in verschiedenartige Schutzgehäuse eingebaut werden kann.

Es versteht sich, dass zum Verstellen des Abstandes-zwischen der Rückwand 2 und der Andruckplatte 10 auch alternative bzw. den Bedienungskomfort erhöhende Verstellmöglichkeiten verwendet werden können.

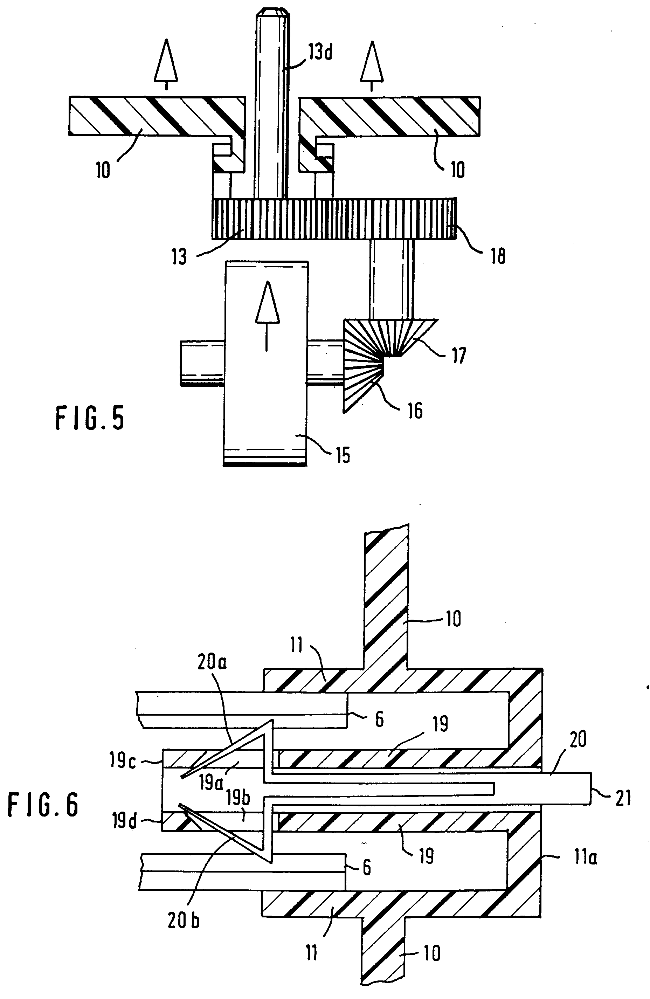

So wird in Fig. 5 beispielsweise eine Ausführungsform gezeigt, bei welcher die Verstellschraube 13 über ein quer zu ihrem Schaft 13d gelagertes Verstellrad 15, dessen Drehung über zwei Kegelräder 16, 17 sowie ein Zwischenrad 18 auf die Verstellschraube 13 übertragen wird, verstellt werden kann. Durch die Uebereinstimmung der so erreichten Bewegungsrichtungen von Verstellrad 15 und Andruckplatte 10 kann die Orientierung für den Benützer erleichtert werden.

In Fig. 6 wird eine weitere, alternative Möglichkeit zum Verstellen des Abstandes zwischen der Rückwand 2 und der Andruckplatte 10 gezeigt.

Anstelle einer Verstellschraube 15 wird bei dieser Ausführungsform eine Druckknopfmechanik zum stufenlosen Verstellen der Andruckplatte 10 verwendet.

Die Führungshülse 11 weist eine Innenhülse 19 auf, in welcher ein Spreizstift 20 längsverschieblich geführt ist. Die Innenhülse 19 weist Durchbrüche 19a, 19b auf, durch welche die am Spreizstift 20 federnd angeordneten Rastnocken 20a, 20b austreten und die Führungshülse 11 in einer bestimmten Position in der Gewindehülse 6 arretieren. Durch Druck auf den, auf der hinteren Stirnseite 11a der Führungshülse 11 austretenden Druckknopf 21 werden die Rastnocken 20a, 20b durch Auflaufen auf die Steuerabschnitte 19c, 19d der Innenhülse 19 gegen ihre Federvorspannung nach innen gedrückt, so dass die Arretierung der Führungshülse 11 gelöst wird und die Andruckplatte 10 stufenlos verstellt werden kann.

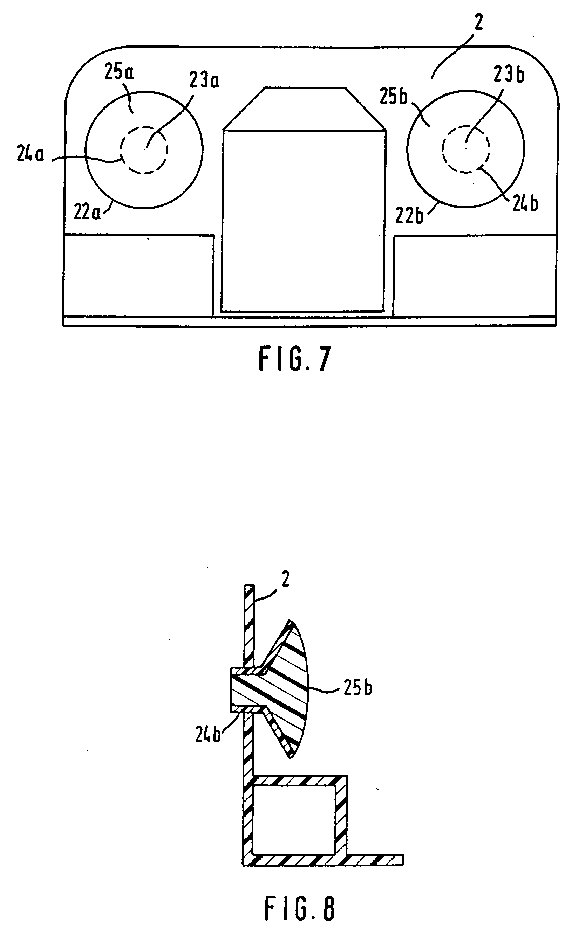

In den Fig. 7 und 8 wird eine spezielle Ausbildung der Brillenhalterung mit zwei pilzförmigen Schutzelementen 22a, 22b gezeigt, welche einerseits in die Rückwand 2 eingesetzt werden können und so die Gläser einer in der Brillenhalterung aufbewahrten Brille vor Beschädigungen und Verkratzen schützen und andererseits von der Rückwand 2 abgenommen und losgelöst von der Brillenhalterung zur Reinigung der Brillengläser verwendet werden können.

In der Rückwand 2 sind zwei runde Durchbrüche 23a, 23b vorgesehen, in welche die Schäfte 24a, 24b der Schutzelemente 22a, 22b hineingesteckt werden können. An den gegen die Brille gerichteten Stirnseiten der Schäfte 24a, 24b sind pilzförmige Kappen 25a, 25b angeordnet, welche vorzugsweise mit einem weichen Textilbelag bezogen sind. Die Schäfte 24a, 24b können dabei nur soweit in die Rückwand 2 hineingesteckt werden, dass die Kappen 25a, 25b zum Herausziehen der Bauteile 22a, 22b noch bequem erfasst werden können.

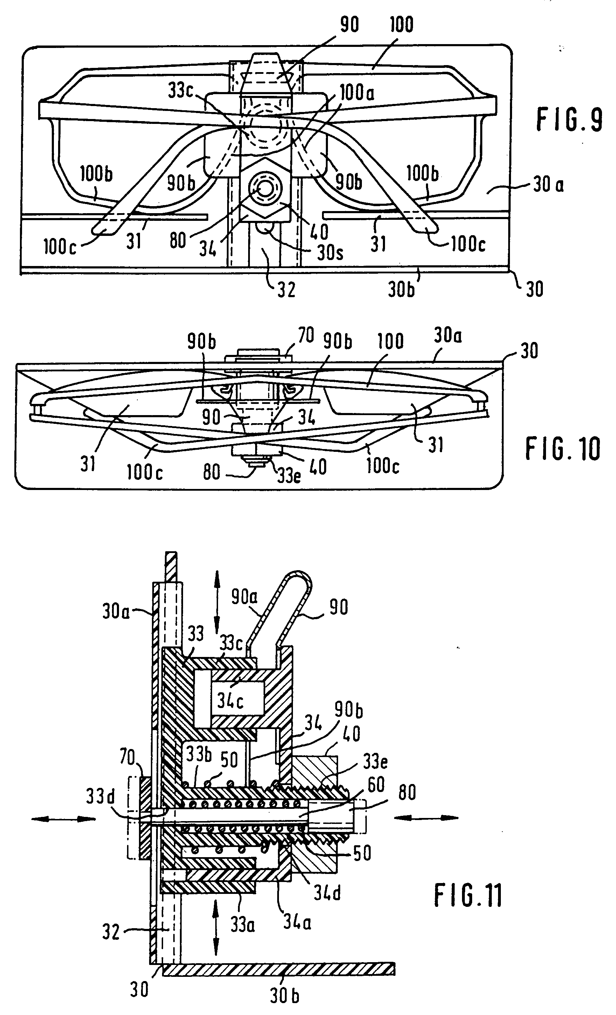

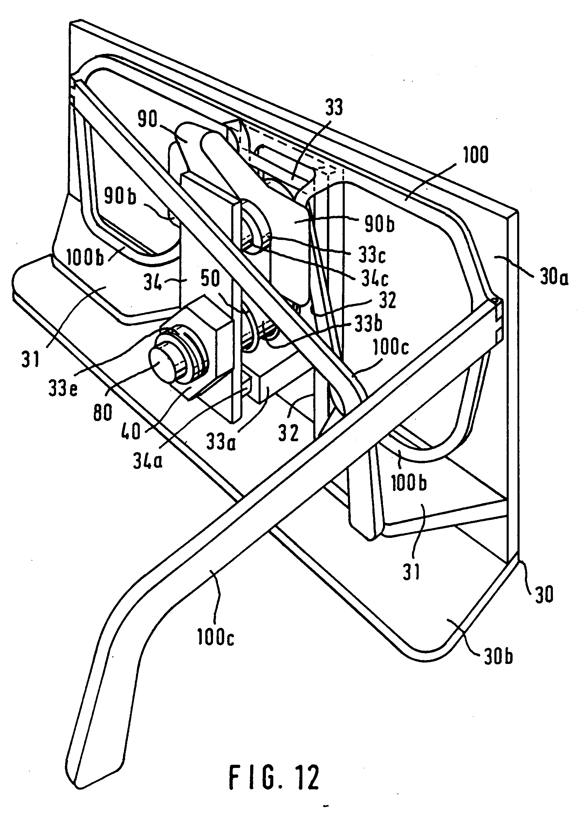

In den Figuren 9 bis 12 wird eine weitere Ausführungsformen der Brillenhalterung dargestellt.

An der Rückwand 30a des Trägers 30 sind rechtwinklig abstehende, symmetrisch zu ihrer Mittelachse angeordnete Brillenabstützungen 31 angeordnet.

Zwischen den Brillenabstützungen 31 ist eine, sich im wesentlichen über die Höhe der Rückwand 30a erstreckende Führungsnut 32 angeordnet, in welcher der Schlitten 33 gleitbeweglich gelagert ist.

Im Schlitten 33 ist die Andruckplatte 34, welche parallel zur Rückwand 30a verläuft, über das Zentrierorgan 33c, welches den Zapfen 34c führt und die Teleskopführung 33a, 34a parallelverschieblich gelagert.

Der Schlitten 33 weist zusätzlich in seinem unteren Bereich eine Hülse 33b auf, die sich zwischen dem und parallel zum Zentrierorgan 33c und der Teleskopführung 33a des Schlittens 33 nach hinten erstreckt.

Die Andruckplatte 34 weist ein Loch 34d auf, durch welches hindurch sich die Hülse 33b erstreckt.

An ihrem hinteren Ende ist die Hülse 33b mit einem Aussengewinde 33e versehen, auf welchem hinter der Andruckplatte 34 eine Verstellmutter 40 aufgeschraubt ist.

Zwischen der Rückwand 30a und der Andruckplatte 34 ist eine durch die Hülse 33b geführte Druckfeder 50 eingespannt, welche die Andruckplatte 34 gegen die Verstellmutter 40 drückt. Durch Drehen der Verstellmutter 40 kann der Abstand zwischen der Rückwand 30a und der Andruckplatte 34 stufenlos verstellt werden.

In der Hülse 33b ist der Stift 60 gelagert, welcher durch ein Loch 33d im Schlitten 33 sowie durch den parallel zur Führungsnut 32 in der Rückwand 30a angeordneten Schlitz 30s hindurchragt.

Hinter der Rückwand 30a ist am Ende des Stiftes 60 die Bremsplatte 70 angeordnet. Am anderen Ende des Stiftes 60 ist der Druckknopf 80 angeordnet, mittels welchem der Stift 60 manuell gegen die Kraft der in der Hülse 33b angeordneten Stiftfeder 50 nach innen gedrückt werden kann.

Dabei löst sich die Bremsplatte 70, welche bei nicht betätigtem Druckknopf 80 den Schlitten 33 mittels Reibung an der Rückwand 30a fixiert, so dass der Schlitten 33 in der Führungsnut 32 stufenlos in der Höhe verstellt werden kann.

Am oberen Ende der Andruckplatte 34 ist eine schräg nach hinten geneigte, U-förmig gebogene Blattfeder 90 angeordnet.

Am freien Schenkel 90a der Blattfeder 90 sind die beiden Federplatten 90b angeordnet, welche seitlich des Zentrierorgans 33c und der Hülse 33b zwischen die Rückwand 30a und die Andruckplatte 34 hineinragen und parallel zu diesen verlaufen.

An ihrem unteren Ende weist die Rückwand 30a eine rechtwinklig zu ihr stehende Bodenplatte 30b auf, welche sich über die Tiefe der Brillenabstützungen 31 hinaus erstreckt.

Die Brille 100 wird von oben zwischen die Rückwand 30a und die Federplatten 90b in die Brillenhalterung eingesetzt.

Dabei greift das Zentrierorgan 33c in die Nasenausnehmung 100a der Brille 100.

Nach Betätigung des Druckknopfes 80 kann der Schlitten 33 soweit in der Höhe verstellt werden, bis einerseits das Zentrierorgan 33c die obere Begrenzung der Nasenausnehmung 100a berührt und so die Brille 100 seitlich zentriert und andererseits die unteren Ränder 100b der Brille 100 auf den Brillenabstützungen 31 aufliegen und so die Brille 100 gegen ein seitliches Abkippen sichern.

Durch Drehen der Verstellmutter 80 kann die Andruckplatte 34 und mit ihr die beiden Federplatten 90b soweit an die Dicke der Brille 100 angepasst werden, dass diese beim Oeffnen der Bügel 100c nicht nach hinten abkippen kann.

Durch die Federplatten 90b wird einerseits sichergestellt, dass die Brille 100 beim Drehen der Verstellmutter 40 nicht beschädigt werden kann und andererseits auch bei enger Anpassung ohne grossen Druck aus der Brillenhalterung entnommen bzw. in diese eingesetzt werden kann.

Zudem wird so sichergestellt, dass die Brille 100 auch bei einem Umklappen oder Drehen der Brillenhalterung (beispielsweise beim Einklappen in ein Schutzgehäuse) nicht aus der Brillenhalterung herausfallen kann.

Im weiteren ist die Brille 100 durch die Federplatte 90b gegen Vibrationen und Verkratzen gesichert, wobei es sich empfiehlt, die Bereiche der Rückwand 30a, welche mit der Brille, insbesondere mit deren Gläser in Berührung kommen, mit einem Schutzbelag zu versehen.

Auf beiden Seiten der Andruckplatte 34 und der Federplatte 90b sind Freiräume offen gelassen, durch welche die Brillenbügel 100c hinter die Andruckplatte 34 ragen und dort auf- und zugeklappt werden können, ohne dass dabei die Brille 100 mit der Hand festgehalten werden muss.

Die Bodenwand 30b dient als untere Begrenzung und Schutz für die eingeklappten Bügel 100c, damit sich diese beim Einschwenken der Brillenhalterung in ein Schutzgehäuse nicht mit diesem verklemmen können.

Durch die vorgesehenen Verstellmöglichkeiten kann die Brillenhalterung von einer Bedienerseite her durch den Benützer einfach und schnell an Brillen verschiedenster Formen und Grössen angepasst werden, wobei jede Brille so in der Brillenhalterung festgehalten wird, dass ihre Bügel, auch wenn sie schwergängig sind, einhändig auf- und zugeklappt werden können, ohne dass die Brille aus der Brillenhalterung kippen könnte.

Trotzdem kann die Brille einhändig und ohne Kraftanwendung aus der Brillenhalterung entnommen oder in diese eingesetzt werden.

Die Brillenhalterung ist als einheitliche Baugruppe konzipiert, welche je nach Anwendungen und Platzverhältnissen in verschiedene Schutzgehäuse eingebaut werden kann.

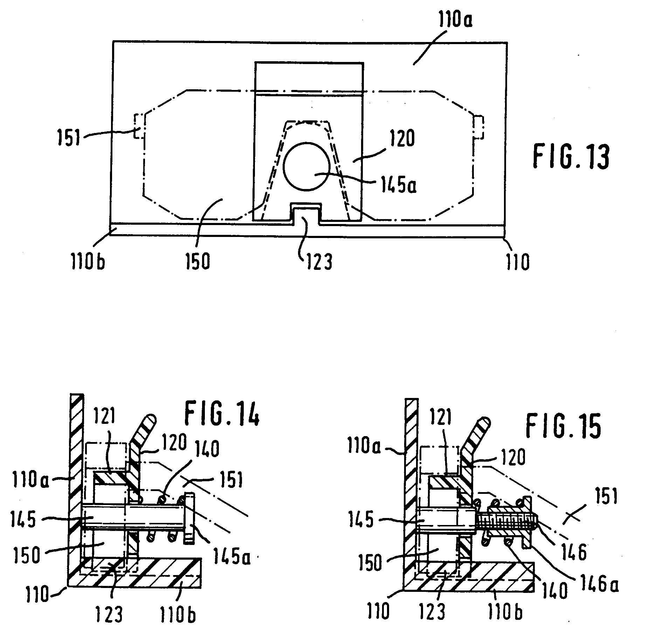

Figuren 13 bis 15 zeigen weitere Ausführungsformen von Andruckplatten.

Der Träger 110 hat einen L-förmigen Querschnitt mit einer Rückwand 110a und einer Bodenwand 110b. In der Mitte des Trägers 110 ist die Andruckplatte 120 angeordnet, welche parallel zur Rückwand 110a verläuft. An der Andruckplatte 120 ist eine gegen die Rückwand 110a gerichtete Zentriernase 121 angeordnet, deren Konturen gegenüber der Andruckplatte 120 zurückversetzt sind. Die Andruckplatte 120 ist in einer Nutenführung 123 in der Bodenwand 110b verschieblich gelagert.

Bei der Ausführungsform in Fig. 14 wird die Andruckplatte 120 mit einer Druckfeder 140, welche auf einem an der Rückwand 110a angeordneten Stift 145 gelagert und an der Endkappe 145a abgestützt ist, gegen die Rückwand 110a gepresst.

Die Brille 150 wird zwischen die Rückwand 110a und die Andruckplatte 120 eingsetzt Dabei greift die Zentriernase 121 in die Nasenausnehmung der Brille 150, welche so seitlich zentriert ist. Die Andruckplatte 120 wird durch die Druckfeder 140 gegen die Brille 150 gedrückt, welche so in der Brillenhalterung festgehalten wird. Die Brillenbügel 151 können hinter der Andruckplatte 120 auf- und zugeklappt werden. Beim Entnehmen der Brille 150 wird diese parallel zur Andruckplatte 120 nach oben herausgezogen. Es versteht sich dabei, dass die Kraft der Druckfeder 140 so abgestimmt sein muss, dass einerseits das Einsetzen bzw. Entnehmen der Brille aus der Brillenhalterung mühelos möglich ist und sich andererseits die Andruckplatte beim Oeffnen bzw. Schliessen der Bügel einer in die Halterung eingesetzten Brille nicht soweit aufgedrückt werden kann, dass die Brille aus der Halterung herausgerissen wird.

In Figur 15 wird eine analoge Andruckvorrichtung für die Andruckplatte 120 gezeigt wie in den Fig. 13 und 14, wobei die Endkappe 146a an einer im Stift 145 verstellbar gelagerten Schraube 146 angeordnet ist. Durch Verdrehen der Schraube 146 kann so die Maximalöffnung zwischen der Rückwand 110a und der Andruckplatte 120 sowie die Klemmkraft der Druckfeder 140 stufenlos eingestellt und so an die Brillendicke optimal angepasst werden.

Auch bei den Ausführungsformen der Brillenaufnahmen in den Figuren 13 bis 15 können die Brillenbügel 151 bei eingesetzter Brille 150 auf- und zugeklappt werden.

## Patentansprüche

1. Brillenhalterung, insbesondere zum Einbau in Kraftfahrzeugen, welche einen Träger (1, 30, 110, 200) mit einer Rückwand (2, 30a, 110a) sowie eine an der Rückwand (2, 30a, 110a) angeordnete Auflage (4a, 4b, 31) zum Abstützen eines Brillengestells einer in die Brillenhalterung eingesetzten Brille (7, 100, 150) an je einer unteren Stelle eines Umfangs ihrer Gläser, aufweist, und mit einer mit dem Träger (1, 30, 110, 200) über eine Parallelführung (6, 11, 33c, 34c, 33a, 34a) beweglich verbundenen, Federmittel (10, 90, 140) aufweisenden Andruckplatte (10, 34, 120), welche auf beiden Seiten Freiräume zum Auf- und Zuklappen von Brillenbügeln (7a, 100c, 151) einer in die Brillenhalterung eingesetzten Brille (7, 100, 150) auf einer der Rückwand (2, 30a, 110a) abgewandten Seite der Andruckplatte (10, 34, 120) beläßt, wobei die Federmittel (10, 90, 140) zum Festklemmen einer zwischen der Rückwand (2, 30a, 110a) und der Andruckplatte (10, 34, 120),) in die Brillenhalterung eingesetzten Brille (7, 100, 150) die Andruckplatte (10, 34, 120) in Richtung der Rückwand (2, 30a, 110a) drücken, **dadurch gekennzeichnet**, daß die Brillenhalterung ein Verstellelement (6a, 13a, 33e, 146) aufweist, mit dem ein Abstand zwischen der Rückwand (2, 30a, 110a) und der Andruckplatte (10, 34, 120) bei nicht eingesetzter Brille (7, 100, 150) zur Anpassung an eine Dicke einer in die Brillenhalterung einzusetzenden Brille (7, 100, 150) einstellbar ist.

2. Brillenhalterung nach Anspruch 1, **dadurch gekennzeichnet**, daß der Abstand zwischen der Rückwand (2, 30a, 110a) und der Andruckplatte (10, 34, 120,) mittels einer Verstellschraube (6a, 13a, 33e, 146) oder einer Verstellmutter(40, 146a) einstellbar ist, die über eine Gewindeverbindung (6a, 13d, 33e 14b) mit der Rückwand (2) verbunden ist.

3. Brillenhalterung nach Anspruch 2, **dadurch gekennzeichnet**, daß hinter der Andruckplatte (10, 34, 120) Mittel (13, 15, 16, 17, 18) angeordnet sind zum Drehen der Verstellschraube (13d).

4. Brillenhalterung nach einem der vorhergehenden Ansprüche, **dadurch gekennzeichnet**, daß der Abstand zwischen der Rückwand (2, 30a, 110a) und der Andruckplatte (10, 34, 120) mittels einer Reibungsbremse (20a, 20b) einstellbar ist.

5. Brillenhalterung nach Anspruch 4, **dadurch gekennzeichnet**, daß die Reibungsbremse (20a, 20b) über einen auf einer der Rückwand (2, 30a, 110a) abgewandten Seite der Andruckplatte (10) angeordneten Druckknopf (21) zum Verstellen der Andruckplatte (10) gelöst werden kann.

6. Brillenhalterung nach einem der vorhergehenden Ansprüche, **dadurch gekennzeichnet**, daß ein Öffnungsweg der Andruckplatte (10, 34, 120) durch einen Anschlag (12) begrenzt ist.

7. Brillenhalterung nach einem der vorhergehenden Ansprüche, **dadurch gekennzeichnet**, daß die Andruckplatte (10, 34, 120) aus einem elastischen Material gefertigt ist.

8. Brillenhalterung nach einem der vorhergehenden Ansprüche, **dadurch gekennzeichnet**, daß zwischen der Rückwand (2, 30a, 110a) und der Andruckplatte (10, 34, 120) eine Zentrierung (5a, 10a, 33c, 34c) angeordnet ist, welche in die Nasenausnehmung (100a) einer eingelegten Brille (7, 100, 150) eingreift und diese seitlich zentriert.

9. Brillenhalterung nach Anspruch 8, **dadurch gekennzeichnet**, daß je eine Teil der Zentrierung (5a, 10a, 33c, 34c) an der Rückwand (2, 30a, 110a) und an der Andruckplatte (10, 34, 120) angeordnet sind und teleskopisch ineinander greifen.

10. Brillenhalterung nach einem der vorhergehenden Ansprüche, **dadurch gekennzeichnet**, daß die Andruckplatte (10, 34, 120) an ihrem oberen Ende eine von der Rückwand (2, 30a, 110a) wegstehende Einlaufschräge (10b, 90a) aufweist.

11. Brillenhalterung nach einem der vorhergehenden Ansprüche, **dadurch gekennzeichnet**, daß sich die Brillenabstützungen (4a, 4b, 31) gegen äußere Endkanten (2a, 2b) der Rückwand (2, 30a, 110a) hin verjüngen.

12. Brillenhalterung nach einem der vorhergehenden Ansprüche, **dadurch gekennzeichnet**, daß der Abstand zwischen den Brillenabstützungen (4a, 4b, 31) und der Zentrierung (5a, 10a, 33c, 34c, 121, 161) verstellt werden kann.

## Claims

1. A spectacle holder, in particular for installation in motor vehicles, which comprises a carrier (1, 30, 110, 200) having a rear wall (2, 30a, 110a) and a rest (4a, 4b, 31) arranged on the rear wall (2, 30a, 110a) for supporting a spectacle frame of a pair of spectacles (7, 100, 150) inserted in the spectacle holder at the lower point of a circumference of each of its lenses; and having a pressure plate (10, 34, 120) movably joined to the carrier (1, 30, 110, 200) by way of a parallel guide means (6, 11, 33c, 34c, 33a, 34a) and having resilient means (10, 90, 140), which pressure plate leaves open empty spaces on both sides for opening out and folding up spectacle side-pieces (7a, 100c, 151) of a pair of spectacles (7, 100, 150) inserted in the spectacle holder on a side of the pressure plate (10, 34, 120) remote from the rear wall (2, 30a, 110a), wherein the resilient means (10, 90, 140) for firmly clamping a pair of spectacles (7, 100, 150) inserted in the spectacle holder between the rear wall (2, 3a, 110a) and the pressure plate (10, 34, 120) press the pressure plate (10, 34, 120) towards the rear wall (2, 30a, 110a), characterised in that the spectacle holder has an adjusting element (6a, 13a, 33e, 146) with which a distance between the rear wall (2, 30a, 110a) and the pressure plate (10, 34, 120) when no pair of spectacles (7, 100, 150) is inserted is adjustable to adapt to the thickness of a pair of spectacles (7, 100, 150) to be inserted in the spectacle holder.

2. A spectacle holder according to claim 1, characterized in that the distance between the rear wall (2, 30a, 110a) and the pressure plate (10, 34, 120) can be adjusted by means of an adjusting screw (6a, 13a, 33e, 146) or an adjusting nut (40, 146a) which is connected to the rear wall (2) by way of a threaded connection (6a, 13d, 33e, 14b).

3. A spectacle holder according to claim 2, characterized in that means (13, 15, 16, 17, 18) for turning the adjusting screw (13d) are arranged behind the pressure plate (10, 34, 120).

4. A spectacle holder according to one of the preceding claims, characterized in that the distance between the rear wall (2, 30a, 110a) and the pressure plate (10, 34, 120) is adjustable by means of a friction brake (20a, 20b).

5. A spectacle holder according to claim 4, characterized in that the friction brake (20a, 20b) can be released by way of a push-button (21) arranged on a side of the pressure plate (10) remote from the rear wall (2, 30a, 110a) to adjust the pressure plate (10).

6. A spectacle holder according to one of the preceding claims, characterized in that the opening travel of the pressure plate (10, 34, 120) is limited by a stop member (12).

7. A spectacle holder according to one of the preceding claims, characterized in that the pressure plate (10, 34, 120) is made from a resilient material.

8. A spectacle holder according to one of the preceding claims, characterized in that a centring means (5a, 10a, 33c, 34c) which engages in the nose space (100a) of an inserted pair of spectacles (7, 100, 150) and centres these laterally is arranged between the rear wall (2, 30a, 110a) and the pressure plate (10, 34, 120).

9. A spectacle holder according to claim 8, characterized in that respective parts of the centring means (5a, 10a, 33c, 34c) are arranged on the rear wall (2, 30a, 110a) and on the pressure plate (10, 34, 120) and engage one another telescopically.

10. A spectacle holder according to one of the preceding claims, characterized in that at its upper end the pressure plate (10, 34, 120) has an angled guide member (10b, 90a) sloping away from the rear wall (2, 30a, 110a).

11. A spectacle holder according to one of the preceding claims, characterized in that the spectacle rests (4a, 4b, 31) taper towards outer end edges (2a, 2b) of the rear wall (2, 30a, 110a).

12. A spectacle holder according to one of the preceding claims, characterized in that the distance between the spectacle rests (4a, 4b, 31) and the centring means (5a, 10a, 33c, 34c, 121, 161) can be adjusted.

## Revendications

1. Porte-lunettes, en particulier pour installation dans des véhicules automobiles, qui présente un support (1, 30, 110, 200) avec une paroi arrière (2, 30a, 110a) ainsi qu'un appui (4a, 4b, 31), disposé sur la paroi arrière (2, 30a, 110a), pour soutenir une monture (7, 100, 150) d'une paire de lunettes insérée dans le porte-lunettes, à chacune des positions inférieures d'une périphérie de leurs verres, et comportant une plaque de pression (10, 34, 120), qui est reliée, avec liberté de déplacement, au support (1, 30, 200) par l'intermédiaire d'un guidage parallèle (6, 11, 33c, 34, 33a, 34a), qui présente des moyens élastiques (10, 90, 140) et qui, des deux côtés, laisse des espaces libres pour permettre de déplier et de replier des branches 7a, 100c, 151) d'une paire de lunettes (7, 100, 150), insérée dans le porte-lunettes, d'un côté de la plaque d'appui (10, 34, 120) opposé à la paroi arrière (2, 30a, 110a), les moyens élastiques (10, 90, 140) poussant la plaque d'appui (10, 34, 120) en direction de la paroi arrière (2, 30a, 100a) pour caler entre la paroi arrière (2, 30a, 110a) et la plaque d'appui (10, 34, 120) une paire de lunettes (7, 100, 150) insérée dans le porte-lunettes, **caractérisé** par le fait que le porte-lunettes présente un élément de réglage (6a, 13a, 33e, 146) avec lequel on peut, la paire de lunettes (7, 100, 150) n'étant pas insérée dans le porte-lunettes, régler une distance entre la paroi arrière (2, 30a, 110a) et la plaque d'appui (10, 34, 120) pour l'adapter à une épaisseur d'une paire de lunettes (7, 100, 150) à insérer dans le porte-lunettes.

2. Porte-lunettes selon la revendication 1, **caractérisé** par le fait que l'on peut régler la distance entre la paroi arrière (2, 30a, 110a) et la plaque d'appui (10, 34, 120) au moyen d'une vis de réglage (6a, 13a, 33e, 146) ou d'un écrou de réglage (40, 146a) qui est relié à la paroi arrière (2) par une liaison par filetage (6a, 13d, 33e, 14b).

3. Porte-lunettes selon la revendication 2, **caractérisé** par le fait que derrière la plaque d'appui (10, 34, 120) sont disposés des moyens (13, 15, 16, 17, 18) pour faire tourner la vis de réglage (13d).

4. Porte-lunettes selon l'une des revendications précédentes, **caractérisé** par le fait que l'on peut régler la distance entre la paroi arrière (2, 30a, 110a) et la plaque d'appui (10, 34, 120) au moyen d'un frein à friction (20a, 20b).

5. Porte-lunettes selon la revendication 4, **caractérisé** par le fait que, pour déplacer la plaque d'appui (10), on peut desserrer le frein à friction (20a, 20b) au moyen d'un bouton-poussoir (21) disposé d'un côté de la plaque d'appui (10) opposé à la paroi arrière (2, 30a, 11a).

6. Porte-lunettes selon l'une des revendications précédentes, **caractérisé** par le fait qu'une course d'ouverture de la plaque d'appui (10, 34, 120) est limitée par une butée (12).

7. Porte-lunettes selon l'une des revendications précédentes, **caractérisé** par le fait que la plaque d'appui (10, 34, 120) est fabriquée en un matériau élastique.

8. Porte-lunettes selon l'une des revendications précédentes, **caractérisé** par le fait qu'entre la paroi arrière (2, 30a, 110a) et la feuille d'appui (10, 34, 120) est disposé un centrage (5a, 10a, 33c, 34c) qui vient en prise dans l'évidement (100a), prévu pour le nez, d'une paire de lunettes (7, 100, 150) insérée dans le porte-lunettes et centre latéralement cet évidement.

9. Porte-lunettes selon la revendication 8, **caractérisé** par le fait qu'une pièce du centrage (5a, 10a, 33c, 34c) est disposée sur la paroi arrière (2, 30a, 110a) et une autre sur la plaque d'appui (10, 34, 120) et qu'elles viennent en prise l'une dans l'autre télescopiquement.

10. Porte-lunettes selon l'une des revendications précédentes, **caractérisé** par le fait qu'à son extrémité supérieure, la plaque d'appui (10, 34, 120) présente une partie oblique d'entrée (10b, 90a) qui s'écarte de la paroi arrière (2, 30a, 110a).

11. Porte-lunettes selon l'une des revendications précédentes, **caractérisé** par le fait que les appuis de lunettes (4a, 4b, 31) vont en diminuant en direction des bords d'extrémité extérieurs (2a, 2b) de la paroi arrière (2, 30a, 110a).

12. Porte-lunettes selon l'une des revendications précédentes, **caractérisé** par le fait que l'on peut régler la distance entre les appuis de lunettes (4a, 4b, 31) et le centrage (5a, 10a, 33c, 34c, 121, 121, 161).
